# DEMANDE DE BREVET EUROPEEN

(11) **EP 3 401 583 A1**
(43) Date de publication de la demande: **14.11.2018**
(21) Numéro de dépôt: 18170838.9
(22) Date de dépôt: 04.05.2018
(51) Int. Cl.: F16L 13/14, F16L 21/03, F16L 21/06, F16L 47/10, F16L 37/092

(54) **RACCORD ENTRE UN APPAREIL ET UN TUBE DANS LEQUEL CIRCULE UN FLUIDE**

(30) Priorité: 09.05.2017 FR 1754061
(71) Demandeur: NEXTHERM, 26760 Beaumont-les-Valence (FR)
(72) Inventeur: BARRAULT, Jean-Luc, 26120 Montmeyran (FR)
(74) Mandataire: Cabinet Laurent & Charras

(57) **Abrégé**

Raccord entre un appareil et un tube dans lequel circule un fluide, ledit raccord (1) comprenant :
- un corps cylindrique creux (3) avec une première extrémité (4) destinée à être connecté à un appareil et une deuxième extrémité (5) destinée à recevoir en insertion et de manière étanche un tube (2) ;
- des moyens de blocage du tube (2) en position d'insertion ;

Selon l'invention, les moyens de blocage du tube (2) comprennent une bague (8) montée coulissante à l'intérieur du corps (3) entre une butée axiale (14) agencée du côté de la première extrémité (4) et des moyens d'appui radial (12) agencés du côté de la deuxième extrémité (5), ladite bague (8) étant destinée à recevoir en insertion le tube (2) et présente intérieurement des moyens d'ancrage (10) sur le tube (2), de sorte que lorsque le tube (2) est inséré dans la deuxième extrémité (5) et dans la bague (8), le retrait du tube (2) provoque le coulissement de la bague (8) en direction des moyens d'appui radial (12) qui forcent l'ancrage de la bague (8) autour du tube (2) et verrouillent ledit tube (2) en position d'insertion.

## Description

### DOMAINE TECHNIQUE

La présente invention concerne le domaine technique des pièces de raccord utilisées pour le raccordement de différents appareils à un réseau de fluide, tel qu'un réseau d'eau, en particulier les appareils sanitaires, les planchers chauffants, les radiateurs ou les chaudières.

### ART ANTERIEUR

Dans ce domaine, il est connu des raccords à compression, des raccords à glissement et des raccords à sertir. Ces raccords sont utilisés pour permettre le raccord entre des tubes en matière plastiques et les appareils.

Ces raccords présentent des inconvénients liés au temps nécessaire pour les installer. Les raccords à glissement et les raccords à sertir nécessitent l'utilisation d'une pince spécialisée, qui est un outil couteux et compliquée. Ainsi un problème se présente en cas de perte ou d'oubli de l'outil, avec un risque de vol.

### EXPOSE DE L'INVENTION

L'un des buts de l'invention est donc de proposer un raccord qui permette d'effectuer les opérations d'installation plus rapidement. Le but de l'invention est donc de fournir un raccord à serrage instantané.

Un autre but de l'invention est de proposer un raccord qui peut être mis en place sans utilisation d'un outillage spécialisé.

Encore un autre but de l'invention est de créer un passage dit « intégral » permettant d'utiliser le raccord pour le passage de fluide, sans diminuer la section de passage à l'intérieur du tube.

Le raccord selon l'invention est conçu pour être très discret et minimiser les dimensions du raccordement.

A cet effet, il a été mis au point un raccord entre un appareil et un tube dans lequel circule un fluide, conforme à l'état de la technique en ce qu'il comprend :
- un corps cylindrique creux avec une première extrémité destinée à être connecté à un appareil et une deuxième extrémité destinée à recevoir en insertion et de manière étanche un tube ;
- des moyens de blocage du tube.

Selon l'invention, les moyens de blocage du tube comprennent une bague montée coulissante à l'intérieur du corps entre une butée axiale agencée du côté de la première extrémité, et des moyens d'appui radial agencés du côté de la deuxième extrémité. La bague est destinée à recevoir en insertion le tube et présente intérieurement des moyens d'ancrage sur le tube, de sorte que lorsque le tube est inséré dans la deuxième extrémité et dans la bague, le retrait du tube provoque le coulissement de la bague en direction des moyens d'appui radial qui forcent l'ancrage de la bague autour du tube et assurent le blocage du tube en position d'insertion.

Selon une forme de réalisation particulière, la bague est élastique et apte à se déformer, en combinaison avec les moyens d'appui pour serrer le tube lorsque ce dernier est retiré du corps. La pression du fluide dans la tuyauterie aura tendance à faire ressortir le tube et, par conséquent, à maintenir un effort sur la bague, qui aura toujours tendance à comprimer la paroi du tube. Ainsi on réalise un moyen d'accroche du tube dans lequel les effets de la pression auront tendance à renforcer la qualité de maintien du tube. Avantageusement la bague est fendue.

De préférence et pour assurer une étanchéité optimale de entre le tube et le raccord, la deuxième extrémité du raccord comprend au moins une rainure interne annulaire recevant un joint d'étanchéité, par exemple torique. L'invention peut être utilisée pour raccorder les appareils aussi bien à tout réseau de fluide, notamment à un réseau d'eau.

A partir de ce concept de base, plusieurs formes de réalisation ont été imaginées.

Selon une réalisation possible, lesdits moyens d'ancrage sont constitués par des filets d'un taraudage, par des dents ou autre moyen similaire.

Selon une réalisation possible, les moyens d'appui à l'intérieur du corps coopérant avec la bague sont constitués par des formes internes en saillie, par exemple sous la forme des demi-sphères.

Selon encore une autre réalisation, ces moyens d'appui sur l'intérieur du corps sont constitués par une forme conique avec un diamètre plus petit de côté de la deuxième extrémité et plus grand du côté de la première extrémité.

Plusieurs formes de réalisation de la butée axiale peuvent être imaginées. Trois sont décrites ci-dessous à titre d'exemple non limitatif.

Selon une première réalisation possible, ladite butée axiale se présente sous la forme d'un épaulement. Avantageusement, cet épaulement est obtenu par une déformation plastique dudit corps après la mise en place de la bague.

Selon une deuxième réalisation ladite butée axiale comprend un anneau élastique disposé dans une gorge interne ménagée au niveau de la première extrémité.

Selon une autre réalisation, ladite butée axiale est un embout fileté vissé à l'intérieur du corps au niveau de la première extrémité. Ledit corps principal à un diamètre interne égal ou supérieur au diamètre externe de la bague.

L'avantage principal de l'invention est la simplicité du montage. Pour mettre le raccord en place il faut pousser le tube en butée au fond du raccord, jusque dans la bague. Comme le raccord est conçu pour être mécaniquement irréversible, le tube est ainsi solidarisé avec le raccord. De cette manière l'invention permet à réduire le temps de pose, tout en assurant l'étanchéité de la connexion. Aucun outillage spécialisé n'est pas nécessaire.

### DESCRIPTION SOMMAIRE DES FIGURES

D'autres caractéristiques et avantages de l'invention ressortiront clairement de la description qui en est réalisée ci-après, à titre indicatif et nullement limitatif, en référence aux figures annexée dans lesquelles :
- la figure 1 annexée est une coupe longitudinale illustrant une première forme de réalisation du raccord selon l'invention, avant introduction du tube ;
- la figure 2 est une coupe longitudinale illustrant une deuxième forme de réalisation du raccord selon l'invention, avant introduction du tube ;
- la figure 3 est une coupe longitudinale illustrant une troisième forme de réalisation du raccord selon l'invention, avant introduction du tube.

### DESCRIPTION DETAILLEE DE L'INVENTION

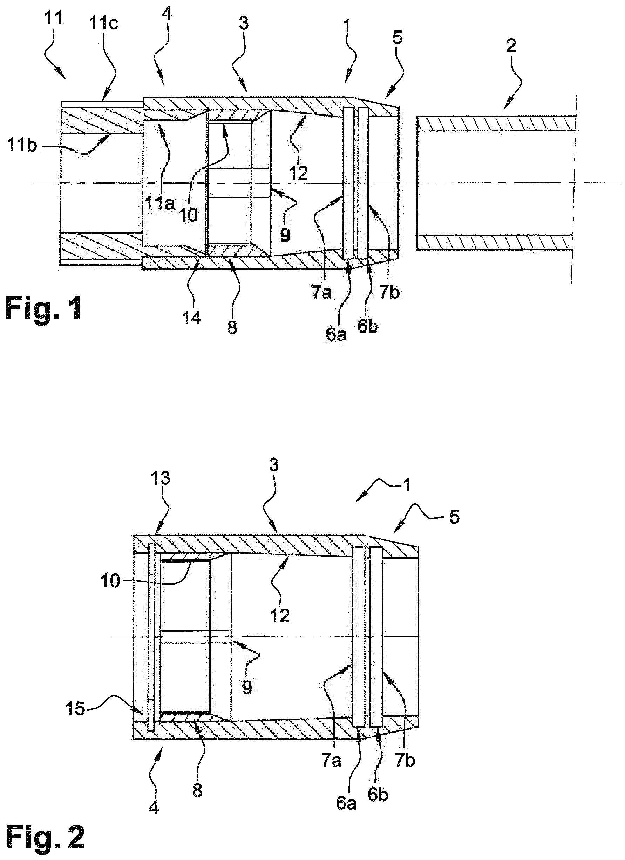

En référence aux figures 1 à 3, l'invention concerne un raccord (1) entre un appareil et un tube (2) dans lequel circule un fluide. Le raccord (1) est composé d'un corps cylindrique creux (3) et comprend une première extrémité (4) destinée à être connecté à l'appareil par tous moyens appropriés, notamment par vissage, et une deuxième extrémité (5) destinée à recevoir en insertion le tube (2), illustré seulement à la figure 2.

Selon une première forme de réalisation illustrée à la figure 1, le raccord (1) comprend des moyens de blocage du tube sous forme d'une bague (8) avec capacité de coulissement à l'intérieur du corps (3). La bague (8) est élastique et fendue, grâce à une découpe (9). La bague (8) est destinée à recevoir en insertion le tube (2) et présente intérieurement un taraudage, ou des dents, pour constituer un moyen d'ancrage sur le tube (2), de sorte que lorsque le tube (2) est inséré dans la deuxième extrémité (5) et dans la bague (8), le retrait du tube (2) provoque le coulissement de la bague (8) en direction d'une portion interne conique (12) se rétrécissant afin de forcer l'ancrage de la bague (8) autour du tube (2) et de verrouiller ledit tube (2) en position d'insertion. L'angle de la portion conique (12) et le coefficient de frottement sont tels que le système est mécaniquement irréversible. La portion interne conique (12) forme des moyens d'appui radial. Ceux-ci peuvent être réalisés de toute manière appropriée, telle que par des formes internes en saillie, par exemple sous la forme des demi-sphères. La bague (8) peut se présenter en deux parties pour faciliter son insertion à l'intérieur du corps (3).

Le corps (3) présente une butée axiale (14) au niveau de la première extrémité (4) assurée par un embout fileté (11). L'embout fileté (11) comprend une portée extérieure (11b) avec un diamètre interne plus petit que celui d'une portée intérieure (11a), et sensiblement égal au diamètre interne du tube (2). La portée (11b) comprend par exemple un filetage externe (11c) pour permettre d'être raccordée à l'appareil. La portée intérieure (11a) est solidarisée avec le corps (3) par frettage ou vissage. Ainsi la portée (11b) constitue une butée axiale pour le tube (2), sans diminuer le diamètre de passage de fluide, et la portée (11a) forme une butée axiale pour le coulissement de la bague (8).

Le raccord comprend des moyens d'étanchéité au niveau de la deuxième extrémité (5), constitués par exemple par deux joints toriques (7a, 7b), logés dans des rainures internes annulaires (6a, 6b) du corps (3).

La figure 2 illustre un deuxième exemple réalisation possible. Certains éléments constitutifs du raccord (1) sont comparables à ceux du premier mode de réalisation décrit ci-dessus et, dans un but de simplification, portent les mêmes références numériques. Seules les différences avec le premier mode de réalisation sont décrites ci-après. Dans cette deuxième réalisation, la butée axiale (14) de la bague (8) est formée par un anneau élastique (13), notamment du type bien connu sous le nom Circlip, logé dans une gorge (15) du corps (3). De cette manière, cela permet de pouvoir insérer facilement la bague d'accrochage dans le tube, et de bloquer ladite bague par la mise en place de l'anneau élastique, sans outil particulier.

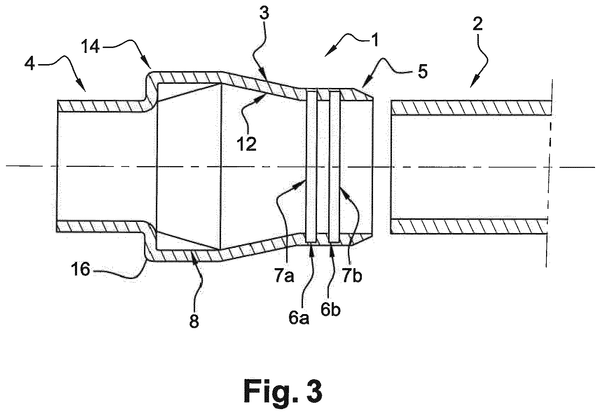

En référence à la figure 3, une autre réalisation possible est proposée. Certains éléments constitutifs du raccord (1) sont comparables à ceux du premier mode de réalisation décrit ci-dessus et, dans un but de simplification, portent les mêmes références numériques. Seules les différences avec le premier mode de réalisation sont décrites ci-après. Dans cette réalisation, la butée axiale (14) de la bague (8) est assurée par un épaulement (16) dans le corps (3) avec un diamètre plus petit du côté de la première extrémité (4) et un plus grand diamètre du côté de la deuxième extrémité (5). Avantageusement, cet épaulement est obtenu par une déformation plastique de corps (3) après la mise en place de la bague (8). Dans cette forme de réalisation, la bague (8) présente une portion interne conique se rétrécissant en direction de la première extrémité (4). Cette portion interne rétrécie peut former les moyens d'ancrage en fonction du coefficient de frottement entre le tube (2) et la bague (8). Sinon, la bague (8) présente intérieurement un taraudage ou des dents.

De ce qui précède, l'invention fournit bien une pièce de raccord (1) entre des appareils et un réseau de fluide, dont l'utilisation est simplifiée, notamment en termes de rapidité de pose et possibilité du montage sans les outils spécialisés. L'utilisation du raccord (1) permet à diminuer le temps total des travaux hydrauliques.

## Revendications

1. Raccord (1) entre un appareil et un tube dans lequel circule un fluide, ledit raccord (1) comprenant :
- un corps cylindrique creux (3) avec une première extrémité (4) destinée à être connecté à un appareil et une deuxième extrémité (5) destinée à recevoir en insertion et de manière étanche un tube (2) ;
- des moyens de blocage du tube (2) en position d'insertion ;
***caractérisé* en ce que** les moyens de blocage du tube (2) comprennent une bague (8) montée coulissante à l'intérieur du corps (3) entre une butée axiale (14) agencée du côté de la première extrémité (4) et des moyens d'appui radial (12) agencés du côté de la deuxième extrémité (5), ladite bague (8) étant destinée à recevoir en insertion le tube (2) et présente intérieurement des moyens d'ancrage (10) sur le tube (2), de sorte que lorsque le tube (2) est inséré dans la deuxième extrémité (5) et dans la bague (8), le retrait du tube (2) provoque le coulissement de la bague (8) en direction des moyens d'appui radial (12) qui forcent l'ancrage de la bague (8) autour du tube (2) et verrouillent ledit tube (2) en position d'insertion.

2. Raccord (1) selon la revendication 1 ***caractérisé* en ce que** ladite bague (8) est élastique et apte à se déformer pour serrer le tube (2) lorsque le tube (2) est retiré du corps (3).

3. Raccord (1) selon la revendication 2 ***caractérisé* en ce que** ladite bague (8) est fendue.

4. Raccord (1) selon la revendication 1 ***caractérisé* en ce que** la deuxième extrémité (5) comprend au moins une rainure interne annulaire (6a) recevant un joint d'étanchéité (7a).

5. Raccord (1) selon la revendication 1 ***caractérisé* en ce que** les moyens d'ancrage (10) sont constitués par des filets d'un taraudage ou par des dents.

6. Raccord (1) selon la revendication 1 ***caractérisé* en ce que** lesdits moyens d'appui radial (12) sont constitués par une forme conique (12) avec un diamètre plus petit de côté de la deuxième extrémité et plus grand du côté de la première extrémité.

7. Raccord (1) selon la revendication 1 ***caractérisé* en ce que** la butée axiale (14) se présente sous la forme d'un épaulement (16).

8. Raccord (1) selon la revendication 1 ***caractérisé* en ce que** ladite butée axiale (14) comprend un anneau élastique (13) disposé dans une gorge interne (15) ménagée au niveau de la première extrémité (4).

9. Raccord (1) selon la revendication 1 ***caractérisé* en ce que** la butée axiale (14) est un embout fileté (11) vissé à l'intérieur du corps (3) au niveau de la première extrémité (4).
